# EUROPÄISCHE PATENTSCHRIFT

(11) **EP 1 446 587 B1**
(45) Veröffentlichungstag und Bekanntmachung des Hinweises auf die Patenterteilung: **26.08.2009**
(21) Anmeldenummer: 02796505.2
(22) Anmeldetag: 20.11.2002
(51) Int. Cl.: F16C 11/06

(54) **GELENK**
JOINT
ARTICULATION

(30) Priorität: 20.11.2001 DE 10156548
(43) Veröffentlichungstag der Anmeldung: 18.08.2004
(73) Patentinhaber: ZF Lemförder Metallwaren AG, 49441 Lemförde (DE)
(72) Erfinder: SIEVE, Manfred, 49393 Lohne (DE)
(86) Internationale Anmeldenummer: PCT/DE2002/004276
(87) Internationale Veröffentlichungsnummer: WO 2003/045717

(56) Entgegenhaltungen:
- EP-A- 0 317 792
- DE-A- 10 018 763
- DE-A- 19 645 132
- FR-A- 2 823 152
- US-A- 4 575 162
- US-A- 6 059 480
- US-A- 6 076 840

## Beschreibung

Die Erfindung betrifft ein Gelenk zur beweglichen Verbindung zweier relativ zueinander beweglicher Bauteile eines Kraftfahrzeuges.

Derartige Gelenke sind gegenwärtig beispielsweise als "Hülsengelenke" zur Lagerung von Stabilisatoren in Kraftfahrzeugen im Einsatz, wie aus den Document US-A-45 75 162 bekannt*.* Die Bezeichnung "Hülsengelenk" ist von dem in dem Lager vorhandenen Lagerkörper abgeleitet, der bei bekannten Ausführungen als Hülse ausgestaltet ist, so dass er eine Durchgangsbohrung aufweist. Die aus dem Stand der Technik bekannten Hülsengelenke verfügen über einen Lagerkörper mit einer sphärisch gestalteten Lagerfläche. Diese ist in einer komplementär gestalteten Lagerschaleninnenoberfläche der Lagerschale aufgenommen und darin gleitbeweglich geführt. Durch die Durchgangsbohrung des Lagerkörpers wird beispielsweise ein Bolzen gesteckt, der zur Befestigung des Gelenkes an einem Kraftfahrzeugbauteil dient.

Es stellt sich jedoch das Problem, dass der zur Einführung und Festsetzung des Bolzens erforderliche Bauraum im Bereich der Radaufhängung sehr eng bemessen ist. Somit wird der Einbau bekannter Gelenke in das Kraftfahrzeug erheblich behindert.

Darüber hinaus konnte festgestellt werden, dass bekannte Hülsengelenke durch die eingebrachte Durchgangsbohrung im Lagerkörper eine Querschnittsschwächung erfahren, die durch einen zusätzlichen Materialauftrag am Außenumfang des Lagerkörpers ausgeglichen werden muss, um die geforderten Festigkeitswerte des Bauteiles zu erfüllen. Die bekannten Gelenkausführungen weisen dementsprechend ein erhebliches Bauvolumen auf und erfordern folglich mehr Bauraum im Bereich der Radaufhängung als dies wünschenswert ist.

Der Erfindung liegt die Aufgabenstellung zu Grunde, ein Gelenk zur Verfügung zu stellen, dass kompakt aufgebaut ist und sich vorzugsweise von einer Seite her mit einem Kraftfahrzeugbauteil verbinden lässt, so dass sein Einbau vereinfacht wird.

Diese technische Aufgabenstellung wird mit den Merkmalen des Patentanspruches 1 gelöst. Weitere Ausgestaltungen der Erfindung sind Gegenstand der Unteransprüche.

Demgemäß weist ein erfindungsgemäßes Gelenk zur beweglichen Verbindung zweier relativ zueinander beweglicher Bauteile eines Kraftfahrzeuges ein Gehäuse und eine in dem Gehäuse aufgenommene Lagerschale zur gleitbeweglichen Lagerung eines Lagerkörpers auf. Der Lagerkörper ist mit einer komplementär zu der Lagerschaleninnenoberfläche gekrümmten Lagerfläche ausgestattet und damit gleitbeweglich in der Lagerschale aufgenommen. Zumindest einseitig weist der Lagerkörper einen Zapfenhals auf, wobei die Lagerfläche in den Zapfenhals übergeht. Der Zapfenhals verfügt über einen Anschlussbereich zur Verbindung des Lagerkörpers mit einem Lagerzapfen.

Durch eine derartige Ausstattung eines Lagerkörpers mit einem Anschlussbereich wird es möglich, einen an dem Lagerkörper zu montierenden Lagerzapfen in kürzerer Zeit mit dem Lagerkörper zu verbinden, so dass sich die Montagezeiten eines erfindungsgemäßen Gelenkes verkürzen. Darüber hinaus wird der Einbau des Gelenkes in das Kraftfahrzeug vereinfacht. Es weist eine geringe Baugröße auf und ist folglich sehr kompakt.

Eine bevorzugte Ausführungsform der Erfindung besteht darin, dass der Lagerkörper zwei diametral zueinander angeordnete Zapfenhälse aufweist und die gekrümmte Lagerfläche eine Gelenkkugel ist. Damit weist der Lagerkörper eine den bekannten Hülsengelenkinnenteilen ähnliche äußere Geometrie auf. Im Unterschied zu den bekannten Ausführungen der Hülsengelenkinnenteile ist bei einem erfindungsgemäßen Gelenk der Lagerkörper nicht mit einer Durchgangsbohrung ausgestattet, sondern weist lediglich einen Anschlussbereich zur Verbindung mit dem Lagerzapfen auf, der vorzugsweise am Zapfenhals vorgesehen ist.

Zur Verbindung des Zapfenhalses des Lagerkörpers mit dem Lagerzapfen können sowohl stoffschlüssige als auch formschlüssige Verbindungen gewählt werden. Darüber hinaus ist eine Kombination aus stoffschlüssiger und formschlüssiger Verbindung möglich und im Sinne der Erfindung realisierbar.

So kann einer Weiterbildung der Erfindung entsprechend, die stoffschlüssige Verbindung zwischen Zapfenhals und Lagerzapfen eine Schweißverbindung oder eine Klebeverbindung sein. Als Schweißverbindung sind Verfahren wie Reibschweißen oder Widerstandspressschweißen möglich.

Eine formschlüssige Verbindung zwischen Zapfenhals und Lagerzapfen kann darüber hinaus dergestalt ausgeführt sein, dass an dem Zapfenhals mindestens ein Stift angeformt wird, der eine Öffnung eines an dem Lagerzapfen vorhandenen Flansches durchdringt und auf der gegenüberliegenden Seite des Flansches mittels einer Materialverformung an dem Flansch angelegt ist. Somit wird eine unlösbare Verbindung zwischen dem Lagerzapfen und dem Zapfenhals erreicht, die höchsten Ansprüchen an einer Dauerfestigkeit gerecht wird.

Eine weitere Möglichkeit, die Verbindung zwischen Zapfenhals und Lagerzapfen auszuführen, besteht darin, an dem Zapfenhals einen Anschlusszapfen anzuformen, dessen zumindest abschnittsweise von einer Kreiszylinderform abweichende Geometrie in eine komplementäre Ausnehmung des Lagerzapfens eingefügt ist. Auch der umgekehrte Fall ist im Sinne der Erfindung ohne weiteres ausführbar. So kann in den Zapfenhals eine Ausnehmung eingebracht werden, in die dann ein eine zumindest abschnittsweise von der Kreiszylinderform abweichende Geometrie aufweisender Anschlusszapfen eingeführt wird.

Anders ausgedrückt wird damit der Zapfenhals des Lagerkörpers mit dem Lagerzapfen verbunden, indem an einem Bauteil ein Anschlusszapfen vorhanden und in das anderen Bauteil eine korrespondierende Ausnehmung eingebracht ist.
Zur Verbindungsart der bezeichneten Bauteile kann demgemäß ein Umformverfahren dienen. Ferner ist es möglich, die Verbindungen mittels einer Presspassung herzustellen oder im einfachsten Falle ein Gewinde an dem Anschlusszapfen anzubringen, welches in ein passendes Innengewinde der Ausnehmung einschraubbar ist. Zur dauerhaften, unlösbaren Festlegung des Lagerkörpers am Lagerzapfen kann darüber hinaus in Kombination mit der forrnschlüssigen Verbindung eine stoffschlüssige Verbindung gewählt werden. Dies ist möglich, jedoch im Sinne der Erfindung nicht zwingend erforderlich.

Eine Weiterbildung der Erfindung wird darüber hinaus darin gesehen, an dem Lagerzapfen und / oder dem Lagerkörper eine Werkzeugangriffskontur bzw. eine Werkzeugeingriffskontur vorzusehen. Diese Werkzeugangriffskontur bzw. Werkzeugeingriffskontur gestattet eine vereinfachte Montage des erfindungsgemäßen Gelenkes sowie den erleichterten Einbau in die Radaufhängung eines Kraftfahrzeuges. Die Werkzeugangriffskontur bzw. Werkzeugeingriffskontur dient als Halterung für ein Werkzeug, während der Lagerzapfen mit dem Lagerkörper verbunden wird. Für den Fall, dass diese Verbindung aus der zuvor genannten Gewindeverbindung besteht, bietet die Werkzeugeingriffskontur bzw. Werkzeugangriffskontur hier eine ideale Halterungsmöglichkeit der Bauteile.

Anhand der Figurendarstellungen sollen nachfolgend zwei bevorzugte Ausführungsformen eines erfindungsgemäßen Gelenkes näher beschrieben werden.

### Es zeigen:

- Figur 1: eine Teilschnittdarstellung durch ein erstes erfindungsgemäßes Gelenk,
- Figur 2: einen teilweise geschnittenen Lagerkörper als Einzelteil,
- Figur 3: einen Lagerzapfen im Teilschnitt,
- Figur 4: eine Schnittdarstellung durch eine andere Ausführungsform eines erfindungsgemäßen Gelenkes,
- Figur 5: einen Schnitt durch den Lagerkörper eines Gelenkes nach Figur 4,
- Figur 6: einen teilgeschnittenen Lagerzapfen des in Figur 4 dargestellten Gelenkes,
und
- Figur 7: einen Teilschnitt durch ein weiteres Gelenk.

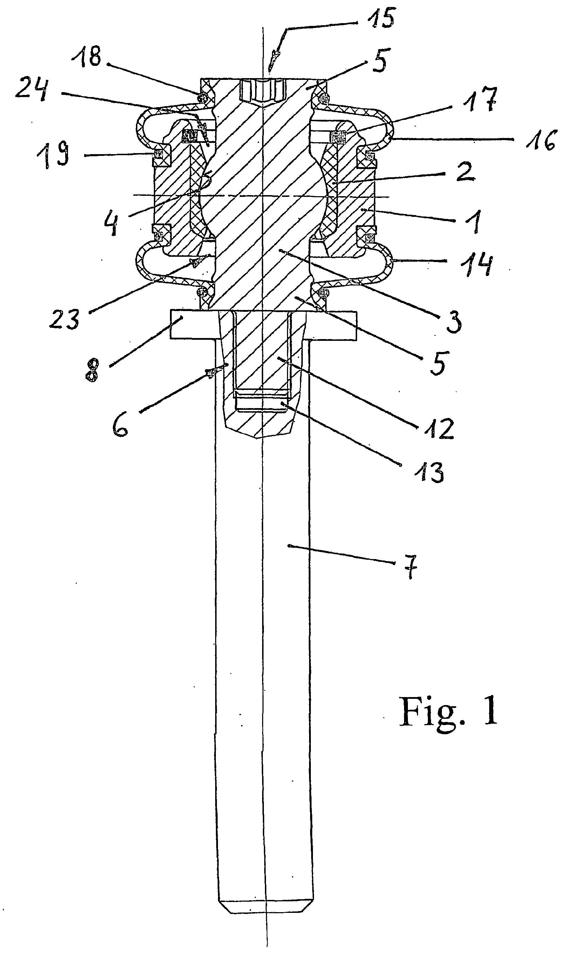

In der Figur 1 ist eine Ausführungsform eines erfindungsgemäßen Gelenkes dargestellt. Dieses besteht aus einem Gehäuse 1 und einer in das Gehäuse eingesetzten Lagerschale 2. Die Lagerschale nimmt dreh- und kippbeweglich eine gekrümmte, hier kugelförmig ausgeführte Lagerfläche 4 eines Lagerkörpers 3 auf. Dazu verfügt die Lagerschale 2 über eine zu der Lagerfläche 4 komplementär gekrümmte Lagerschaleninnenoberfläche.
Das zwei Gehäuseöffnungen 23, 24 aufweisende, beidseitig offene Gehäuse 1 des in Figur 1 gezeigten Gelenkes verfügt einseitig über einen gelenkeinwärts gerichteten Bund, an dem sich die Lagerschale 2 in axialer Gelenkrichtung abstützt. Auf der gegenüberliegenden Seite ist die Lagerschale 2 mittels eines Sicherungsringes 17 in dem Gehäuse 1 festgelegt. Die Festlegung der Lagerschale erfolgt in an sich bekannter Weise durch Umformung eines Gehäuserandes, so dass auf diese Art und Weise der Sicherungsring in einer Gehäusenut arretiert ist.

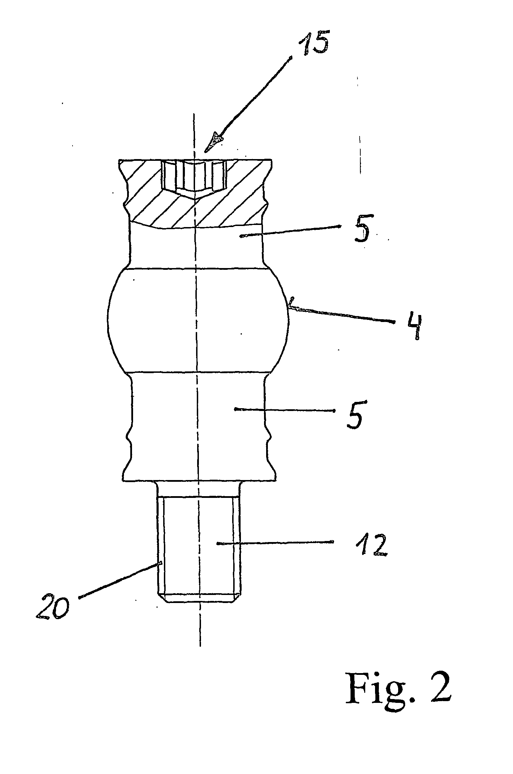

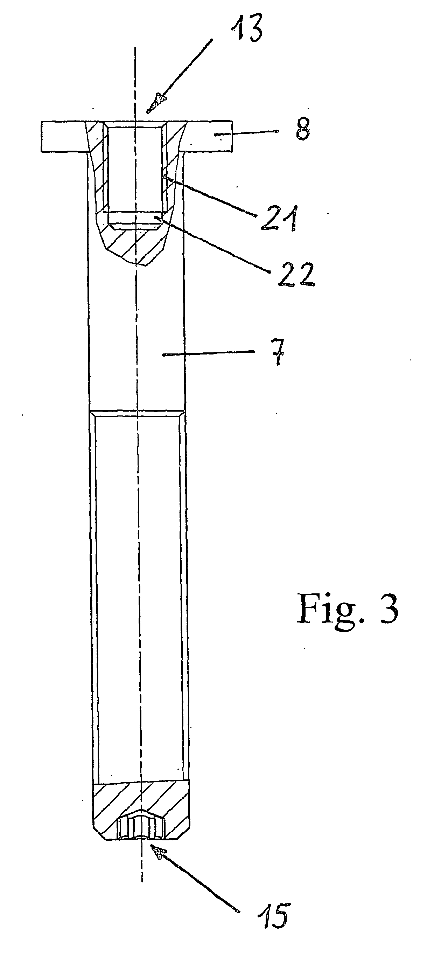

Der Lagerkörper 3 weist beidseitig der als Gelenkkugel ausgeführten gekrümmten Lagerfläche 4 je einen Zapfenhals 5 auf. Wie im oberen Bildteil der Figur 1 erkennbar ist, wurde hier in den Zapfenhals 5 des Lagerkörpers 3 eine Werkzeugeingriffskontur 15 eingebracht. Diese besteht vorliegend aus einem Innensechskant oder Innensechsrund (Torx) zum Ansatz eines entsprechenden Werkzeugschlüssels. Im unteren Teil des Lagerkörpers 3 ist dieser mit einem Anschlussbereich 6 ausgestattet. Der Anschlussbereich besteht bei der in Figur 1 gezeigten Ausführungsform eines erfindungsgemäßen Gelenkes aus einem einteilig mit dem Lagerkörper 3 ausgebildeten und an dem Lagerkörper 3 angeformten Anschlusszapfen 12, welcher mit einem Außengewinde 20 (siehe Figur 2) in ein korrespondierendes Innengewinde 21 (siehe Figur 3) des Lagerzapfens 7 eingeschraubt ist. Zur Einbringung des Innengewindes 21 in den Lagerzapfen 7 wird zuvor in diesen eine Ausnehmung 13 eingebracht. Um Kontakt zwischen Lagerkörper 3 und Lagerzapfen 7 zu verbessern ist im Anlagebereich der genannten Bauteile ein Flansch 8 vorhanden. Zur Abdichtung der empfindlichen Gelenkbauteile dient einerseits ein Dichtungsbalg 14 sowie andereseits ein weiterer Dichtungsbalg 16. Die Dichtungsbälge 14 und 16 sind mittels Spannringen 18 bzw. 19 einerseits unmittelbar am Zapfenhals 5 und andererseits in einer Gehäusenut festgelegt.
Die Zapfenhälse 5 des Lagerkörpers 3 treten durch die Gehäuseöffnungen 23 und 24 in axialer Richtung beidseitig aus dem Gehäuse 1 hervor, so dass hier die Werkzeugeingriffskontur 15 und der Anschlussbereich 6 zur Montage des Gelenkes sowie zu dessen Einbau in das Kraftfahrzeug genutzt werden können.

In der Figur 2 ist zur besseren Veranschaulichung noch einmal ein Lagerkörper 3 des in Figur 1 beschriebenen erfindungsgemäßen Gelenkes als Einzelteil gezeigt. Dieser Lagerkörper 3 weist an einer Seite einen Anschlusszapfen 12 auf, der mit einem Außengewinde 20 ausgestattet wurde. Dieser Anschlusszapfen 12 ist integral mit dem Lagerkörper 3 und einseitig an einem als Zapfenhals 5 ausgeführten Teil des Lagerkörpers 3 angeformt. Auf der dem Anschlusszapfen 12 gegenüberliegenden Seite des Lagerkörpers 3 weist dieser zudem eine Werkzeugeingriffskontur 15 zum Ansatz eines Werkzeugschlüssels auf.

In der Figur 3 ist darüber hinaus ein Lagerzapfen 7 der in Figur 1 beschriebenen Ausführungsform eines Gelenkes teilweise im Schnitt gezeigt. Der Teilschnitt stellt anschaulich das in den Lagerzapfen 7 eingebrachte Sackloch 22 dar, in welches ein Innengewinde 21 eingebracht wurde. Zur Verbesserung der Anlage zwischen Zapfenhals 5 des Lagerkörpers 3 und dem Lagerzapfen 7 ist ein Flansch 8 an dem Lagerzapfen 7 angeformt. Bei der hier dargestellten Ausführung eines Lagerzapfens 7 ist ferner auf der dem Flansch 8 gegenüberliegenden Seite eine Werkzeugeingriffskontur 15 eingebracht, die ähnlich gestaltet ist, wie die zuvor in Figur 2 beschriebene Werkzeugeingriffskontur.

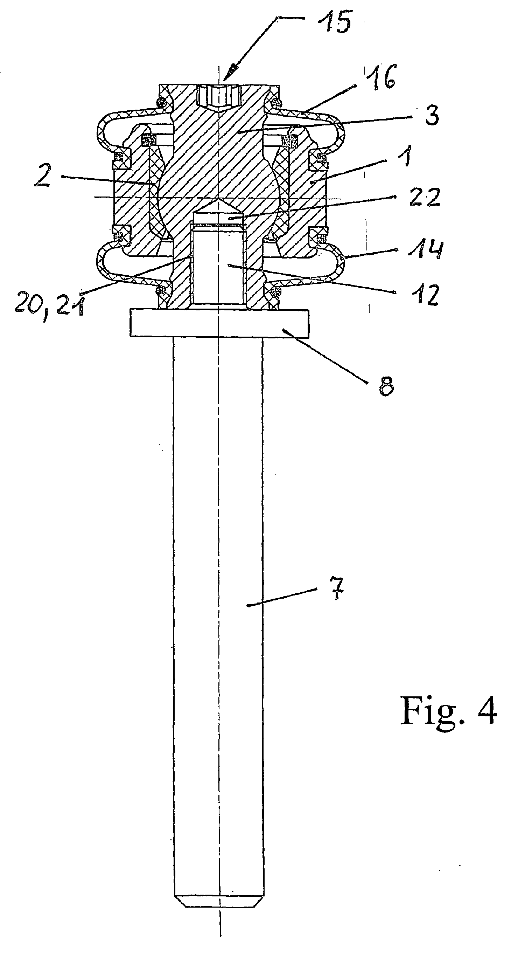

Eine weitere mögliche Ausführungsform eines erfindungsgemäßen Gelenkes wird in der Figur 4 im Teilschnitt gezeigt. Dieses Gelenk ist grundsätzlich vorn Aufbau her ähnlich dem in Figur 1 beschriebenen Gelenk, weshalb für identische Bauteile auch die gleichen Bezugszeichen verwendet wurden.
Im Unterschied zu der Darstellung in Figur 1 weist der Lagerkörper 3 eine Ausnehmung 13 auf, die nur bis zu einer definierten Tiefe in den Lagerkörper 3 eingebracht wurde. Diese als Sackloch 22 ausgeführte Ausnehmung 13 verfügt darüber hinaus über ein Innengewinde 21. In dieses Innengewinde 21 ist ein Anschlusszapfen 12, an dem ein korrespondierendes Außengewinde 20 vorhanden ist, einschraubbar, bis die Stirnseite des Zapfenhalses 5 des Lagerkörpers 3 an dem Flansch 8 des Lagerzapfens 7, an welchem der Anschlusszapfen vorhanden ist, zur Anlage kommt und damit in Folge der Selbsthemmung des Gewindes eine sichere Arretierung der zu verbindenden Bauteile ermöglicht wird.

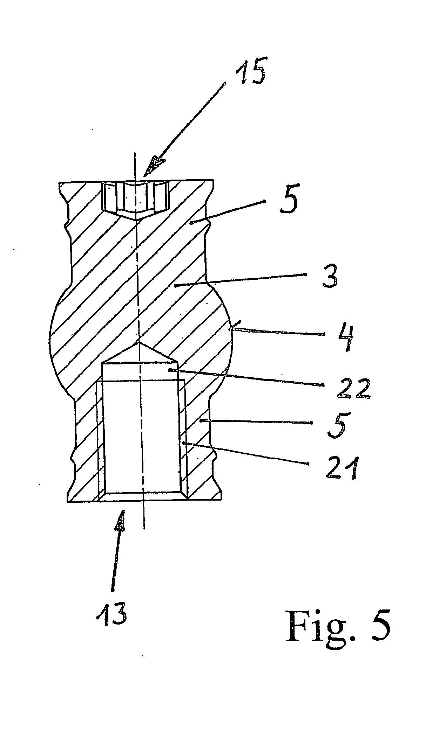

Wie aus der Figur 5 zu ersehen ist, in der eine Schnittdarstellung des Lagerkörpers 3 eines Gelenkes gemäß Figur 4 gezeigt wird, verfügt der Lagerkörper 3 ebenfalls über eine Werkzeugeingriffskontur 15 auf der dem Anschlussbereich 6 gegenüberliegenden Seite. Da es sich bei der Ausnehmung 13 nicht um eine Durchgangsbohrung handelt, können mit den hier gezeigten Ausführungen höhere Festigkeitswerte bei reduzierten Abmessungen realisiert werden, als es bislang bei bekannten Gelenken möglich war.

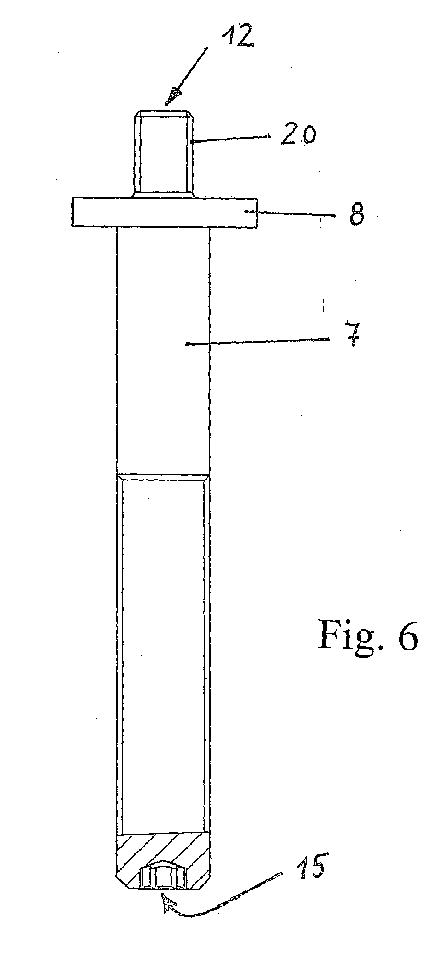

In der Figur 6 ist noch einmal ein Lagerzapfen 7 gezeigt, der im Teilschnitt einerseits eine Werkzeugeingriffskontur 15 aufweist und dieser gegenüberliegend oberhalb des Flansches 8 einen Anschlusszapfen 12, dessen Außengewinde 20 in das zuvor beschriebene Innengewinde 21 des Lagerkörpers 3 einschraubbar ist, bis die Stirnseite des Zapfenhalses 5 des Lagerkörpers 3 mit dem Flansch 8 zur Anlage kommt. Darüber hinaus dient die Werkzeugeingriffskontur 15 der Erleichterung des Einbaus des Gelenkes in die Radaufhängung eines Kraftfahrzeuges.

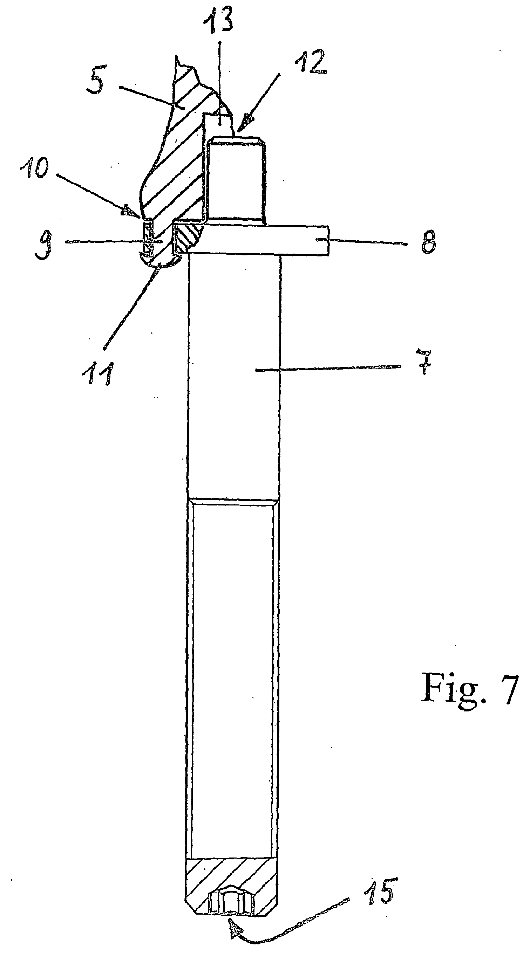

In der Figur 7 ist ferner eine ausschnittsweise Darstellung des Verbindungsbereiches zwischen Lagerzapfen 7 und Lagerkörper 3 gezeigt, wie sie in sinnvoller Weise ebenfalls umsetzbar ist. Der Zapfenhals 5 weist hierbei eine Ausnehmung 13 auf, in die ein Anschlusszapfen 12 eingesteckt ist. Der Anschlusszapfen und die Ausnehmung haben eine komplementäre Kreiszylinderkontur. In den Flansch 8 am Lagerzapfen 7 sind über seinen Umfang verteilt mehrere Öffnungen 10 eingebracht, die von an dem Zapfenhals 5 angeformten Stiften 9 durchsetzt sind. Auf der dem Zapfenhals 5 gegenüberliegenden Seite weisen diese Stifte 9 eine Materialverformung 11 auf, so dass sie eine dauerfeste Verbindung zwischen Lagerzapfen 7 und Lagerkörper 3 gewährleisten.

### Bezugszeichenliste

1. Gehäuse
2. Lagerschale
3. Lagerkörper
4. Lagerfläche
5. Zapfenhals
6. Anschlussbereich
7. Lagerzapfen
8. Flansch
9. Stift
10. Öffnung
11. Materialverformung
12. Anschlusszapfen
13. Ausnehmung
14. Dichtungsbalg
15. Werkzeugangriffskontur / Werkzeugeingriffskontur
16. Dichtungsbalg
17. Sicherungsring
18. Spannring
19. Spannring
20. Außengewinde
21. Innengewinde
22. Sackloch
23. Gehäuseöffnung
24. Gehäuseöffnung

## Patentansprüche

1. Gelenk zur beweglichen Verbindung zweier relativ zueinander beweglicher Bauteile eines Kraftfahrzeuges mit einem Gehäuse (1) und einer in dem Gehäuse (1) aufgenommenen Lagerschale (2) zur gleitbeweglichen Lagerung eines Lagerkörpers (3), dessen zu der Lagerschaleninnenoberfläche komplementär gekrümmte Lagerfläche (4) in zwei diametral zueinander angeordnete Zapfenhälse (5) übergeht, **dadurch gekennzeichnet, dass** ein Zapfenhals (5) einen Anschlussbereich (6) zur Verbindung mit einem Lagerzapfen (7) aufweist und der andere diametral gegenüberliegende Zapfenhals (5) eine Werkzeugangriffskontur (15) beziehungsweise eine Werkzeugeingriffskontur (15) aufweist, derart, dass die Werkzeugangriffskontur (15) beziehungsweise die Werkzeugeingriffskontur (15) als Halterung für ein Werkzeug zur Montage des Gelenks ausgebildet ist.

2. Gelenk nach Anspruch 1,
**dadurch gekennzeichnet, dass**
die Lagerfläche (3) eine Gelenkkugel bildet.

3. Gelenk nach einem der vorstehend genannten Ansprüche,
**dadurch gekennzeichnet, dass**
ein Zapfenhals (5) des Lagerkörpers (3) stoffschlüssig und / oder formschlüssig mit dem Lagerzapfen (7) verbunden ist.

4. Gelenk nach Anspruch 3,
**dadurch gekennzeichnet, dass**
die stoffschlüssige Verbindung zwischen dem Zapfenhals (5) und dem Lagerzapfen (7) eine Schweißverbindung oder eine Klebeverbindung ist.

5. Gelenk nach Anspruch 3,
**dadurch gekennzeichnet, dass**
die formschlüssige Verbindung zwischen dem Zapfenhals (5) und dem Lagerzapfen (7) aus mindestens einem an dem Zapfenhals (5) angeformten Stift (9) besteht, der eine Öffnung (10) eines an dem Lagerzapfen (7) vorhandenen Flansches (8) durchdringt und auf der gegenüberliegenden Seite des Flansches (8) eine Materialverformung (11) aufweist.

6. Gelenk nach Anspruch 3,
**dadurch gekennzeichnet, dass**
die formschlüssige Verbindung zwischen dem Zapfenhals (5) und dem Lagerzapfen (7) aus einem an dem Zapfenhals (5) angeformten Anschlusszapfen (12) besteht, dessen zumindest abschnittsweise von einer Kreiszylinderform abweichende Geometrie in eine komplementäre Ausnehmung (13) des Lagerzapfens (7) eingefügt ist.

7. Gelenk nach Anspruch 3,
**dadurch gekennzeichnet, dass**
die formschlüssige Verbindung zwischen dem Zapfenhals (5) und dem Lagerzapfen (7) aus einer in den Zapfenhals (5) eingebrachten Ausnehmung (13) besteht, in die ein eine zumindest abschnittsweise von der Kreiszylinderform abweichende und zu der
Ausnehmung (13) komplementäre Geometrie aufweisender Anschlusszapfen (12) eingefügt ist.

8. Gelenk nach Anspruch 6 öder 7,
**dadurch gekennzeichnet, dass**
die Verbindung zwischen Anschlusszapfen (12) und Ausnehmung (13) durch ein Umformverfahren hergestellt wird, mittels einer Presspassung erfolgt oder ein Gewinde ist.

9. Gelenk nach einem der vorstehend genannten Ansprüche,
**dadurch gekennzeichnet, dass**
der Lagerzapfen (7) eine Werkzeugangriffskontur (15) beziehungsweise eine Werkzeugeingriffskontur (15) aufweist.

## Claims

1. Joint for movably connecting two components of a motor vehicle, which can be moved relative to each other, with a housing (1) and a bearing shell (2), which is accommodate in the housing (1), for bearing in a slidingly movable manner a bearing body (3), whose bearing face (4), which is curved in a complementary manner to the bearing shell inner surface, merges into two stud necks (5) which are arranged diametrically opposite each other, **characterised in that** one stud neck (5) has a connection region (6) for connection to a bearing stud (7), and the other, diametrically opposite stud neck (5) has a tool attachment contour (15) or a tool engagement contour (15) in such a manner that the tool attachment contour (15) or the tool engagement contour (15) is configured as a holder for a tool for mounting the joint.

2. Joint according to Claim 1,
**characterised in that**
the bearing face (3) forms a joint ball.

3. Joint according to one of the preceding claims,
**characterised in that**
a stud neck (5) of the bearing body (3) is connected in a cohesive and/or form-fitting manner to the bearing stud (7).

4. Joint according to Claim 3,
**characterised in that**
the cohesive connection between the stud neck (5) and the bearing stud (7) is a welded connection or an adhesive connection.

5. Joint according to Claim 3,
**characterised in that**
the form-fitting connection between the stud neck (5) and the bearing stud (7) consists of at least one pin (9) which is integrally formed on the stud neck (5) and penetrates an opening (10) of a flange (8), which is present on the bearing stud (7), and has a material deformation (11) on the opposite side of the flange (8).

6. Joint according to Claim 3,
**characterised in that**
the form-fitting connection between the stud neck (5) and the bearing stud (7) consists of a connection stud (12) which is integrally formed on the stud neck (5) and whose geometry, which differs at least in sections from a circular cylindrical shape, is inserted into a complementary recess (13) of the bearing stud (7).

7. Joint according to Claim 3,
**characterised in that**
the form-fitting connection between the stud neck (5) and the bearing stud (7) consists of a recess (13) which is introduced into the stud neck (5) and into which a connection stud (12) is inserted, which has a geometry which differs at least in sections from the circular cylindrical shape and is complementary to the recess (13).

8. Joint according to Claim 6 or 7,
**characterised in that**
the confection between the connection stud (12) and the recess (13) is made by a deformation process, takes place by means of a press-fit, or is a thread.

9. Joint according to one of the preceding claims,
**characterised in that**
the bearing stud (7) has a tool attachment contour (15) or a tool engagement contour (15).

## Revendications

1. Articulation pour relier de manière mobile deux composants mobiles l'un par rapport à l'autre d'un véhicule automobile comportant un logement (1) et un coussinet de palier (2) logé dans le logement (1) pour le positionnement mobile par coulissement d'un corps de palier (3), dont la surface de palier (4) courbe de manière complémentaire à la surface intérieure du coussinet de palier aboutit à deux cols de tourillon (5) disposés diamétralement l'un par rapport à l'autre, **caractérisée en ce que** un col de tourillon (5) présente une zone de raccordement (6) à des fins de liaison avec un tourillon (7) et l'autre col de tourillon (5) diamétralement opposé présente un contour d'attaque d'outil (15), respectivement un contour de mise en prise d'outil (15), de telle sorte que le contour d'attaque d'outil (15), respectivement le contour de mise en prise d'outil (15) soit conçu comme un support d'un outil destiné au montage de l'articulation.

2. Articulation selon la revendication 1,
**caractérisée en ce que**
la surface de palier (3) forme une rotule d'articulation.

3. Articulation selon une des revendications précédentes,
**caractérisée en ce que**
un col de tourillon (5) du corps de palier (3) est relié par conjonction de matière et/ou conjonction de forme avec le tourillon (7).

4. Articulation selon la revendication 3,
**caractérisée en ce que**
la liaison par conjonction de matière entre le col de tourillon (5) et le tourillon (7) est une liaison par soudage ou une liaison par collage.

5. Articulation selon la revendication 3,
**caractérisée en ce que**
la liaison par conjonction de forme entre le col de tourillon (5) et le tourillon (7) consiste en au moins une goupille (9) façonnée sur le col de tourillon (5), qui traverse une ouverture (10) d'une bride (8) présente sur le tourillon (7) et présente sur le côté opposé de la bride (8) une déformation de matériau (11).

6. Articulation selon la revendication 3,
**caractérisée en ce que**
la liaison par conjonction de forme entre le col de tourillon (5) et le tourillon (7) consiste en au moins un tourillon de raccordement (12) façonné sur le col de tourillon (5), dont une géométrie s'écartant d'une forme de cylindre circulaire au moins sur des portions est insérée dans un évidement (13) complémentaire du tourillon (7).

7. Articulation selon la revendication 3,
**caractérisée en ce que**
la liaison par conjonction de forme entre le col de tourillon (5) et le tourillon (7) consiste en un évidement (13) ménagé dans le col de tourillon (5), dans lequel un tourillon de raccordement (12) présentant une géométrie complémentaire de l'évidement (13) et s'écartant au moins sur des portions de la forme de cylindre circulaire est inséré.

8. Articulation selon la revendication 6 ou 7,
**caractérisée en ce que**
la liaison entre le tourillon de raccordement (12) et l'évidement (13) est réalisée par un procédé de déformation, au moyen d'un ajustement avec serrage ou d'un filetage.

9. Articulation, selon une des revendications précédentes,
**caractérisé en ce que**
le tourillon (7) présente un contour d'attaque d'outil (15), respectivement un contour de mise en prise d'outil (15).
